**Europäisches Patentamt**

**European Patent Office**

**Office européen des brevets**

(19)

(11) Veröffentlichungsnummer : **0 169 462
B1**

(12) EUROPÄISCHE PATENTSCHRIFT

(45) Veröffentlichungstag der Patentschrift :
15.03.89

(21) Anmeldenummer : **85108742.9**

(22) Anmeldetag : **12.07.85**

(51) Int. Cl.⁴ : **H 02 M   3/156, H 04 B   3/44**

(54) Schaltungsanordnung zur Speisung von elekrischen Verbrauchern.

(30) Priorität : **13.07.84 DE 3425905**

(43) Veröffentlichungstag der Anmeldung :
**29.01.86 Patentblatt 86/05**

(45) Bekanntmachung des Hinweises auf die Patenterteilung : **15.03.89 Patentblatt 89/11**

(84) Benannte Vertragsstaaten :
**AT BE CH DE FR GB IT LI NL SE**

(56) Entgegenhaltungen :
**EP—A— 0 111 729**

(73) Patentinhaber : **Siemens Aktiengesellschaft Berlin
und München
Wittelsbacherplatz 2
D-8000 München 2 (DE)**

(72) Erfinder : **Musil, Gerhard, Dipl.-Ing.
Ludwig-Braille-Strasse 8
D-8000 München 70 (DE)**

## Beschreibung

Die Erfindung bezieht sich auf eine wie im Oberbegriff des Patentanspruchs 1 angegebene Schaltungsanordnung.

Eine derartige Schaltungsanordnung ist bereits aus der EP-A-111 725 oder aus der EP-A-99596 bekannt.

Die Schaltungsanordnung nach der EP-A-111 725 beschreibt einen konstantstromgespeisten Umrichter, der in der Weise eine konstante, potentialgetrennte Spannung für eine variable Belastung erzeugt, daß ein entsprechend geregelter Drosselwandler eine variabel aufgenommene Spannung in eine stabilisierte Spannung umsetzt. Die stabilisierte Spannung ist etwas höher als die der Maximalleistung zugeordnete Eingangsspannung. Aus der stabilisierten Spannung wird von einem ungeregelten Durchflußwandler potentialgetrennt die Ausgangsspannung erzeugt.

Sind mehrere derartige Schaltungsanordnungen mit ihren Eingängen in einem gemeinsamen Speisekreis angeordnet und wird die den Speisekreis speisende Konstantstromquelle eingeschaltet, so muß die von der Konstantstromquelle aufzubringende Spannung unter Umständen wesentlich höher sein, als die Spannung, die für die vorgesehenen Betriebsarten maximal zur Verfügung gesteltt werden muß.

Außerdem ist für solche Geräte ein Schutz gegen Beeinflussungsströme nicht ohne weiteres möglich, da sie ihre Eingangsspannung mit zunehmendem Eingangsstrom herabsetzen und z. B. Überspannungsableiter, wie sie für ohmsche Verbraucher üblich sind, nicht ansprechen. Die dann fließenden hohen Ströme könnten aber das Gerät zerstören.

Aufgabe der Erfindung ist es daher, die Schaltungsanordnung der eingangs genannten Art derart auszubilden, daß die Eingangsspannung, die sich während des Anlaufvorganges nach Einschalten des speisenden Konstantstromes ergibt, nicht wesentlich größer ist als die bei Normalbetrieb maximal auftretende Eingangsspannung.

Die bekannte Schaltungsanordnung nimmt beim Anlaufen zunächst eine Spannung auf, die etwa gleich der vom Strom-Spannungs-Umsetzer an den Spannungsumsetzer abgegebenen Spannung ist. Diese kann aber zur Abdeckung von Überlastfällen relativ hoch gewählt worden sein.

Gemäß der Erfindung wird die Schaltungsanordnung in der im kennzeichnenden Teil des Patentanspruchs 1 angegebenen Weise ausgebildet.

Dabei läuft der Schaltregler mit einem auf die Fernspeiseeinrichtung abgestimmten Tastgrad hoch und schaltet erst dann auf seinen normalen Regelmodus um, sobald sich die vom Schaltregler an den Gleichspannungswandler abgegebene Spannung aufgebaut hat. Alternativ oder zusätzlich können der bzw. die Lastkreise erst nach dem Anlauf zugeschaltet werden.

Durch diese Maßnahmen ergibt sich der Vorteil, daß die Eingangsspannung, die sich während des Anlaufvorganges ergibt, mit Rücksicht auf die Erfordernisse der Fernspeiseeinrichtung gewählt werden kann. Erforderlichenfalls kann die Eingangsspannung sogar wesentlich kleiner als die bei Normalbetrieb maximal auftretende Eingangsspannung sein, wenn dies aufgrund bestimmter Vorgaben für das Fernspeisesystem erforderlich ist.

Vorteilhafte Ausgestaltungen der Erfindung ergeben sich aus den abhängigen Ansprüchen.

Die Erfindung wird anhand der in den Figuren dargestellten Ausführungsbeispiele näher erläutert.

Es zeigen

Fig. 1 eine Einrichtung zur Fernspeisung elektrischer Verbraucher mittels Gleichstrom-Reihenspeisung,

Fig. 2 einen Schaltregler, der einen eingeprägten Gleichstrom in eine Konstantspannung umwandelt und eine Vorrichtung zur Hilfsspannungserzeugung,

Fig. 3 einen Schaltregler nach Fig. 1 mit weiteren Einzelheiten der Vorrichtung zur Hilfsspannungserzeugung,

Fig. 4 einen Ausschnitt aus der Schaltungsanordnung nach Fig. 3 mit weiteren Einzelheiten,

Fig. 5 einen Schaltregler mit einem Relaiskontakt am Eingang, der auch zum Ableiten von Überströmen dient,

Fig. 6 eine weitere Ausgestaltung der Anordnung nach Fig. 5,

Fig. 7 einen Schaltregler, dessen Schaltglied zum Ableiten von Überströmen zusätzlich ausgenutzt ist.

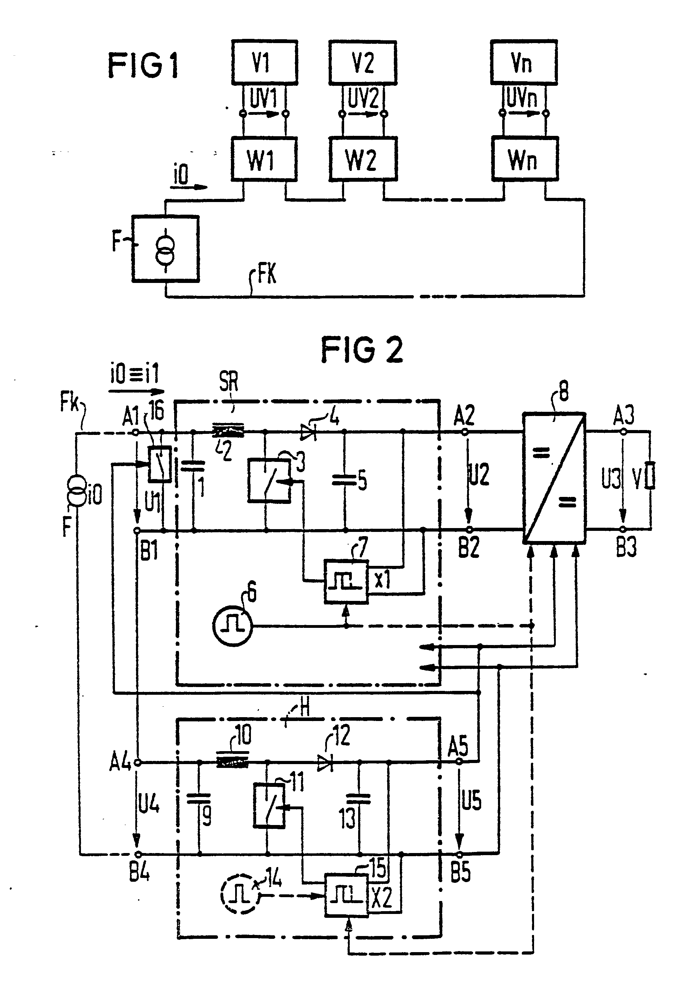

In Fig. 1 ist eine ferngespeiste Anlage als Blockschaltbild dargestellt. Das fernspeisende Gerät F gibt einen konstanten Gleichstrom $i_0$ ab. Die Fernzuspeisenden Verbraucher V1, V2, ... Vn werden an ihrem Speiseeingang am besten mit konstanter Spannung betrieben. Die vorgeschalteten Schaltregler W1, W2, ... Wn wandeln den an ihrem Eingang eingeprägten Strom $i_0$ in eine konstante Spannung $U_{V1}$, $U_{V2}$, ... $U_{Vn}$ für den Verbraucher um.

Die in Fig. 2 gezeigte Schaltungsanordnung enthält den Schaltregler SR, den Spannungsumsetzer 8 und die Vorrichtung H zur Hilfsspannungserzeugung. Der Schaltregler ist in an sich bekannter Weise als Drosselwandler ausgebildet und kann aber auch in anderer Art ausgeführt sein. Wesentlich ist, daß er mit einem Schalter im Querzweig ausgestattet ist und dieser von einer Steuerschaltung geöffnet und geschlossen wird, die ihrerseits von außen beeinflußt werden kann. Wenn die Schaltungsanordnung dazu neigt, zunächst eine hohe Eingangsspannung aufzunehmen, ist das beschriebene Anlaufverhalten mit beschränktem Tastgrad besonders vorteilhaft. Bei dem Schaltregler SR ist parallel zum Eingang der Kondensator 1 und parallel zum Ausgang der Kondensator 5 angeordnet. Die Kondensatoren 1 und 5 und das Schaltglied 3 sind einpolig miteinander verbunden. Auf der diesem Verbindungspunkt abgewandten Seite sind die Kondensatoren 1 und 5 über eine Serienschaltung aus der Drossel 2 und der Diode 4 verbunden, wobei die Drossel 2 am Eingang liegt und die Diode 4 so gepolt ist, daß sie für Ströme vom Eingang zum Ausgang durchlässig ist. Das Schaltglied 3 ist in einem Querzweig des Schaltreglers zwischen dem Verbindungspunkt von Drossel 2 und Diode 4 einerseits und dem Verbindungspunkt der Kondensatoren 1 und 5 andererseits angeordnet.

Der Schaltregler SR bildet den eigentlichen Strom-Spannungsumformer. Dieser besteht aus der Drossel 2 und dem Halbleiterschalter 3, die in Serie zueinander unmittelbar im ferngespeisten Leitungszug liegen ; parallel dazu ist der Kondensator 1, der klein ist im Vergleich zu dem am Ausgang des Schaltreglers liegenden Kondensator 5, angeordnet.

Der Halbleiterschalter 3 wird von einem impulsbreitenmodulierten Signal in der Weise geöffnet und geschlossen, daß gerade so viel von Fernspeisekreis und von der in der Drossel 2 und dem Eingangskondensator 1 gespeicherten Energie über die Diode 4 dem Ausgangskondensator 5 zugeleitet wird, daß an diesem die Spannung konstant bleibt, solange ein bestimmter maximaler Laststrom, der an dieser Stelle höchstens gleich dem Fernspeisestrom $i_o$ sein kann, nicht überschritten wird. Die Steuerung des pulsbreitenmodulierten Signals erfolgt in gleicher Weise wei bei bekannten Drosselwandlern.

Der dem Schaltregler nachgeschaltete Gleichspannungsumrichter 8 kann wegen der konstanten Spannung U2 an seinem Eingang in einfacher Weise nach einem der bekannten Prinzipien ausgeführt werden. Er ist vorzugsweise ein ungeregelter Durchflußumrichter mit Trennübertrager. Seine Taktfrequenz wird vorteilhaft vom gleichen Oszillator 6 bezogen, der auch den Schaltregler ansteuert.

Das Gerät kann auch schnellen Lastschwankungen folgen, da der Eingangskondensator 1 verhältnismäßig klein ist und daher rasch auf die dem geänderten Lastfall entsprechende neue Eingangsspannung umgeladen wird. Der im Vergleich dazu vom Prinzip her träge Spannungsumrichter ist von der Änderung in seiner Betriebsweise nicht betroffen.

Der Taktgeber 6, der Regler 7 und ggf. auch der Spannungsumrichter 8 benötigen eine Hilfsspannung. Diese wird im Schaltregler H erzeugt. Eine solche Anordnung wird in der EP-A-169461 näher beschrieben. Nach Fig. 2 hat der Schaltregler die gleiche Funktionsweise wie der Schaltregler SR. Einander entsprechende Schaltmittel sind 9 und 1, 10 und 2, 11 und 3, 12 und 4, 13 und 5, 14 und 6 sowie 15 und 7. Die Schaltmittel des Schaltreglers H werden für die dort geltenden Anforderungen nach den gleichen Prinzipien wie beim Schaltregler SR bemessen. Zweckmäßigerweise wird der Taktgeber 6 auch für den Schaltregler H verwendet, so daß der Taktgeber 14 entfallen kann.

Der Schaltregler H erzeugt eine positive und eine negative Hilfsspannung bezogen auf das Potential der unmittelbar miteinander verbundenen Klemmen B1 und B2. Da die Spannung U5 größer als die Spannung U4 ist und sich beide Spannungen auf das Potential der Klemmverbindung B4, B5 beziehen, ist die zur Verfügung stehende positive Hilfsspannung die Spannung U5-U4. Als negative Hilfsspannung dient die Spannung U4. Bei üblicher Dimensionierung ist dabei U5 etwa um den Faktor 5 bis 10 größer als U4, was auch die im allgemeinen gestellten Forderungen erfüllt. So ergibt sich z. B. bei einem Fernspeisestrom von 0,4 A, üblichen Hilfsspannungen von etwa 10 ... 20 V und der vergleichsweise geringen Ausgangsleistung der Hilfsspannungsquelle eine Spannung U4 von etwa 2V.

Zum Anlaufen der Hilfsspannungserzeugung ist es notwendig, daß zunächst bei geöffnetem Schalter 11 die Spannung U5 den Wert erreicht, bei dem der Taktgeber 14 und die Regeleinrichtung 15 zu arbeiten beginnen. Erreicht die Spannung U5 ihren Sollwert, so beginnt der Regler 15 zu arbeiten und steuert entsprechend den Schalter 11 mit Impulsen so an, daß dieser periodisch geschlossen wird. Die Spannung U4, die zunächst etwa so groß ist wie die Spannung U5, wird innerhalb weniger Millisekunden auf ihren späteren Wert reduziert. Für den Schaltregler SR und den Umrichter 8 steht dann die positive Hilfsspannung U5-U4 zur Verfügung. Die reduzierte Spannung U4 verbleibt als negative Hilfsspannung.

In vorteilhafter Weise setzt die Hilfsspannung sehr rasch ein. Dies ergibt sich daraus, daß sich nach dem Einschalten zunächst die Kondensatoren 9 und 13 aufladen und daran anschließend beim Einsetzen der Regelung des Schaltreglers H die Spannung am Kondensator 9, der eine vergleichsweise kleine Kapazität hat, zusammenbricht. Für die Schaltungsanordnung treten somit keine Übergangzustände auf, die insbesondere empfindliche Leistungsbauelemente beschädigen könnten.

Um während der Zeit des Anlaufens der Hilfsspannung zwischen den Klemmen A1 und B1 keine undefiniert hochlaufende Spannung zu bekommen, ist bei der in Fig. 2 gezeigten Anordnung am Eingang des Schaltreglers SR ein Schalter 16 eingefügt. In Abwandlung dieser Anordnung kann der Schalter 3 so beschaltet sein, daß er geschlossen bleibt, solange die Hilfsspannung noch nicht eingesetzt hat und der Schalter 16 entfallen.

Der Schalter 16, der am Eingang des Schaltreglers SR liegt, ist zunächst geschlossen und wird erst bei vorhandener Hilfsspannung geöffnet. Dadurch wird auch bei einem langsamen Hochlaufen der zwischen den Punkten A1 und B4 liegenden Spannung, wie es unter Umständen durch schlechte dynamische Eigenschaften des fernspeisenden Gerätes F oder durch Kabelkapazitäten hervorgerufen sein kann, mit Sicherheit vermieden, daß der Schaltregler SR unkontrolliert zuviel Spannung aufnimmt. Der Schalter 16 ist zweckmäßigerweise ein Ruhekontakt eines Relais, dessen Wicklung von der Hilfsspannung (U5-U4) angesteuert wird.

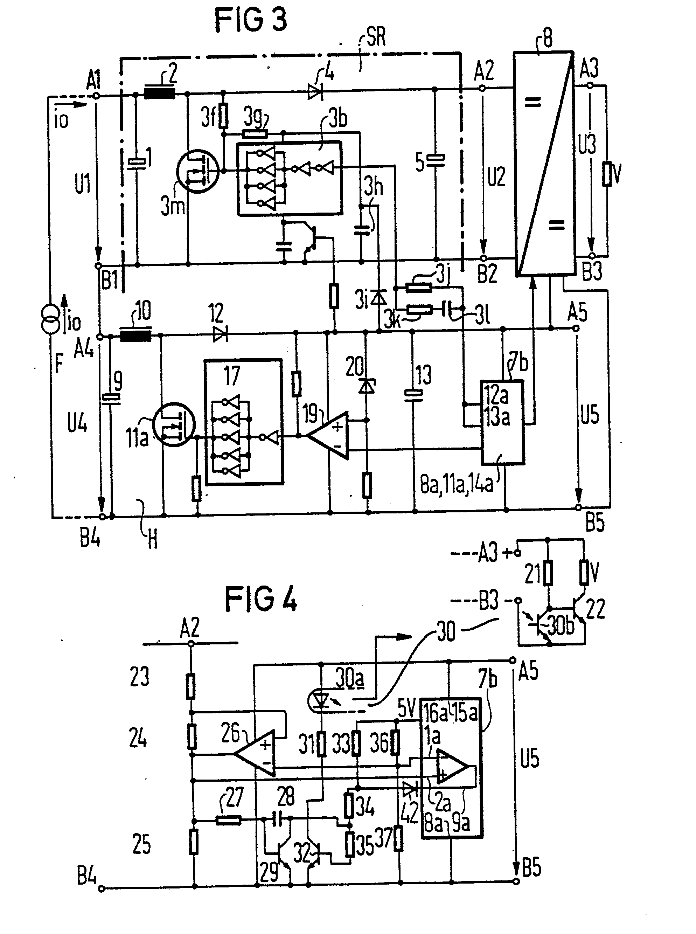

Besonders vorteilhaft ist es, statt des Schalters 16 den in jedem Fall vorhandenen Schalter 3 zu benutzen. Wird an dieser Stelle ein MOS-Feldeffekttransistor verwendet, so genügt es, einen hochohmigen Widerstand zwischen dessen Gate und Drain oder Klemme A2 zu schalten, um ihn beim Einschalten des Stromes $i_o$ in ausreichend leitenden Zustand zu bekommen. Eine derartige Schaltungsanordnung geht aus Fig. 3 hervor.

Die Hilfsspannung kann auch auf andere als die oben beschriebene Art erzeugt werden. Sie kann z. B. von der Eingangsspannung U1 oder der Ausgangsspannung U2 des Schaltreglers SR abgeleitet werden. In beiden Fällen liegt dann zweckmäßigerweise in Serie zum Schalter 16 ein Widerstand oder eine Z-Diode, um zur Hilfsspannungserzeugung eine gewisse minimale Spannung zu garantieren. Allerdings wird dann die die Hilfsspannung erzeugende Baugruppe H mit einer Spannung gespeist, die beim Anlaufen selbst und bei Lastschwankkungen ebenfalls stark schwankt, was die Realisierung einer stabilen Hilfsspannungsquelle erschwert.

Bei der in Fig. 3 gezeigten Schaltungsanordnung dient die mit 7b bezeichnete integrierte Schaltung SG 3524 J als Taktgeber 6 und Regler 7. Sie erzeugt den Takt und steuert den Schaltregler SR mit breitenmodulierten Steuerimpulsen. Der von diesem Schaltkreis abgegebene Sägezahn wird dem Komparator 19 zugeleitet, der ihn mit der um den Spannungsabfall an einer Z-Diode 20 verminderten Spannung U5 vergleicht. Die Impulse am Ausgang des Komparators 19 steuern über den Treiber 17 den Schalttransistor 11. Die mit dieser einfachen Anordnung gewonnene Stabilisierung ist ausreichend. Die Spannung U5 kann z. B. etwa 13 V, die zugehörige Eingangsspannung U4 bei laufendem Gesamtgerät z. B. etwa 1,6 V bei einem Fernspeisestrom $i_o = 0,4$ A betragen.

Die zusätzlichen Bauelemente 3f ... 3l um den Ansteuerbaustein 3b des Schalters im Schaltregler SR verhindern, daß die zunächst im Vergleich zum Potential der Klemme B1 negativen Spannungen im Hilfsumrichter H eine negative Spannung an das Gate des Feldeffekttransistors 3m bringen und so das Schließen dieses Schalters verhindern. Dadurch ist es auch möglich, den zwischen Gate und Drain des Feldeffekttransistors 3m liegenden Widerstand 3f so hochohmig zu halten, daß er im Betriebszustand nur sehr geringe Verluste verursacht.

Diese Art der Hilfsspannungserzeugung läßt sich auch mit auf andere Art ausgeführten stromgespeisten Umrichtern auf vorteilhafte Weise verbinden. Insbesondere ist sie auf Stromversorgungsschaltungen für die eingangsseitig nötige Hilfsspannung ebenfalls anwendbar, bei denen ein Schaltglied in Verbindung mit anders gearteten Schaltmitteln in den Speisestromkreis eingefügt ist.

Nach dem Anlaufen der Hilfsspannung wird der Schalter 16 geöffnet und/oder der Schalter 3 von der Ansteuervorrichtung mit Impulsen angesteuert. Da die Spannung U2 zunächst noch zu niedrig ist, würde die Regelung von sich aus auf maximal mögliche Eingangsspannung U1 laufen. Für bestimmte Anwendungsfälle wird der Schaltregler SR zweckmäßigerweise so dimensioniert, daß auch noch eine Überlast, z. B. hervorgerufen durch einen defekten Verbraucher V, zumindest kurzzeitig beherrscht werden kann. In einer Fernspeiseeinrichtung mit vielen Verbrauchern ist im allgemeinen nur mit einem oder wenigen solcher Überlastfälle zu rechnen. Verhalten sich die Schaltregler SR beim Einschalten, das ja für alle Schaltungsanordnungen nach Fig. 1 in einer solchen Fernspeiseeinrichtung gleichzeitig erfolgt, wie bei der Verarbeitung von Überlastfällen, so muß die Konstantstromquelle der Fernspeiseeinrichtung entsprechend dimensioniert werden. Für den praktischen Betrieb ist sie dann überdimensioniert oder kann vielleicht gar nicht realisiert werden.

Man kann zusätzliche Maßnahmen ergreifen, die ein gleichzeitiges Einschalten aller Geräte verhindern. Dies erfordert jedoch eine unterschiedliche Ausbildung oder Einstellung der ferngespeisten Einrichtungen.

Die geregelte Ansteuerbaugruppe 7 ist so betrieben, daß zunächst eine Pulsfolge mit festem oder zumindest beschränktem Tastverhältnis abgegeben wird und sich so beim gesamten Anlaufvorgang am Klemmenpaar A1, B1 eine Spannung $U_{1ein}$ einstellt, die kleiner als die nach Beendigung des Anlaufvorganges maximal mögliche Eingangsspannung $U_{1max}$ ist. Mit der der Spannung $U_{1ein}$ zugeordneten Leistungsaufnahme wird dann zunächst der Schaltreglers SR und gegebenenfalls der Umrichter 8 betrieben und deren Kondensatoren geladen. Überschreitet die Spannung U2 ihren Sollwert um einen bestimmten kleinen Betrag $\Delta$ U2, so wird das von einem Spannungsdiskriminator dem Regler 7 mitgeteilt, der darauf in die normale Betriebsweise umgeschaltet wird. Die Regelung reagiert dann zunächst mit einem Herabsetzen der Eingangsspannung U1, wodurch auch die Spannung U2 sinkt. Bei Erreichen des Sollwertes der Spannung U2 stellt sich die der abgegebenen Leistung zugeordnete Eingangsspannung U1 ein. Anstelle der Spannung U2 kann gegebenenfalls die Spannung U3 ausgewertet werden.

Das Erfassen der Spannung U2 kann in bekannter Weise erfolgen. Zweckmäßigerweise wird nach Fig. 4 der gleiche Spannungsteiler 23, 24, 25, wie er auch zur Regelung im Betriebsfall dient, und die gleiche Referenzspannung, die am Anschluß 16a der Ansteuervorrichtung 7b zur Verfügung steht, verwendet.

Besonders vorteilhaft ist es, wenn die Hilfsspannung schon möglichst zu Beginn des Anlaufverhaltens zur Verfügung steht, wie dies bei der Schaltungsanordnung nach Fig. 3 der Fall ist.

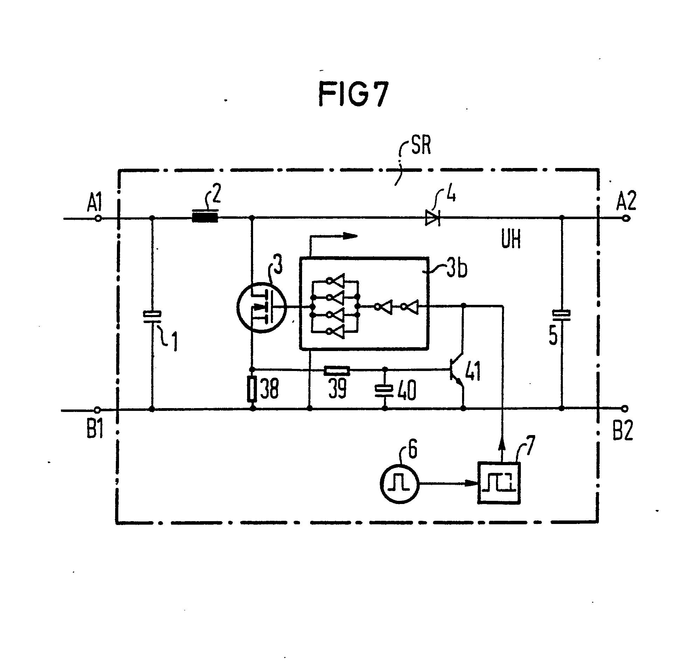

Steht die Hilfsspannung nicht sofort zur Verfügung, so kann die Ansteuerung der Schalter 16 auch mit einer Zeitverzögerung versehen werden oder mit einer Einrichtung, die erst dann anspricht, wenn die Hilfsspannung einen gewissen Mindestwert erreicht hat, der zum einwandfreien Betrieb der anzusteuernden Baugruppen nötig ist. Solch eine Einrichtung kann insbesondere eine Z-Diode in Serie zum Widerstand 16h in der nachstehend beschriebenen Fig. 6 sein, deren Wert näherungsweise dem minimal benötigten Wert der Hilfsspannung entspricht.

Vorteilhaft ist es, das Tastverhältnis beim Anlauf so zu bemessen, daß es gerade geringfügig höher ist, als es sich einstellen würde, wenn der Verbraucher V seine Nennleistung aufnimmt. Defekte Verbraucher mit zu hoher Leistungsaufnahme werden dann automatisch nicht voll angeschaltet.

Eine zweite vorteilhafte Bemessung ist so, daß ausgehend von dem Betriebsfall, bei dem die Fernspeiseeinrichtung die höchste Leistung abgeben muß, die mögliche Leistungsaufnahme für das Anlaufen der Schaltregler errechnet wird und in der Folge das zugehörige Tastverhältnis. Man bekommt so die für die Fernspeiseeinrichtung mögliche kürzeste Anlaufzeit, ohne für den Betriebsfall unnötige Reserven vorsehen zu müssen.

Eine weitere vorteilhafte Ausgestaltung ist so, daß die Verbraucher zunächst ganz oder teilweise weggeschaltet werden und die mögliche Leistungsaufnahme für das Anlaufen der Schaltregler nach dem Betriebsfall bemessen wird, für den die niedrigste Fernspeisespannung pro Gerät zur Verfügung steht. Nach dem Anlaufvorgang werden dann der bzw. die Verbraucher zugeschaltet. Die Auslösung dieses Vorgangs geschieht zweckmäßigerweise durch die gleiche Vorrichtung, die auch das Ende des Anlaufvorgangs erkennt und auf die normale Betriebsweise umschaltet.

Fig. 4 zeigt einen Ausschnitt aus einer Schaltungsanordnung nach Fig. 2. Der Regler 7b ist ein integrierter Ansteuerschaltkreis S& 3524 J und enthält einen Operationsverstärker, der mit seinem Minuseingang am Anschluß 1a mit seinem Pluseingang am Anschluß 2a und mit seinem Ausgang am Anschluß 9a liegt. Der Regler 7b enthält ferner eine Referenzspannungsquelle, deren Ausgang am Anschluß 16a liegt. Der Spannungsteiler 36, 37 an 16a teilt die Referenzspannung 5 V auf 2,5 V, die einerseits die Sollgröße des Reglers in 7b bildet und andererseits am Minuseingang des Komparators 26 liegt, der einen offenen Kollektorausgang hat.

Als Regelspannung dient hier die Spannung zwischen den Anschlüssen A2, B4. Diese ist näherungsweise gleich groß der im Gerät zu regelnden Spannung U2 zwischen den Anschlüssen A2 und B2. Dadurch wird der Schaltungsaufbau einfacher, weil der Schaltkreis 7b an der Hilfsspannung liegt, die als negatives Bezugspotential B4 hat.

Der Spannungsteiler 23 + 24 zu 25 bestimmt im Betriebsfall die Istgröße von A2, B4, auf die der Regelkreis im Baustein 7b hinregelt. Im Anlaufmodus ist der offene Kollektor von 26 auf B4 geschaltet. Der Regelverstärker im Schaltkreis 7b läuft auf einen Anschlag, der durch den Spannungsteiler 33, 34 und 35 im Zusammenwirken mit der Basis-Emitterdiode von 32 und der Diode 42 gebildet wird.

Im Anlaufmodus wirkt der Spannungsteiler 23 und 24, da der Ausgang von 26 den Widerstand 25 kurzschließt. Der Wert an diesem Spannungsteiler wird mit einer Spannung von 2,5 V verglichen. Wenn die Spannung A2, B4 den Sollwert um einen kleinen vorgegebenen Betrag überschritten hat, werden die 2,5 V überschritten und der Ausgang von 26 wird hochohmig. Der Anlauf ist beendet. Der Regler in 7b kann jetzt frei arbeiten, da gleichzeitig der Spannungsteiler aus 33, 34 und 35 mit seinen Diodenspannungen über den Transistor 29 mit einer von 27 und 28 gebildeten Zeitkonstante umgeschaltet wurde. Die Widerstandskette 33, 34, 35 steuert während des Anlaufens gleichzeitig den Transistor 32 in den leitenden Zustand, der damit die LED 30a im Optokoppler 30 über den Widerstand 31 anspricht. Dieser Optokoppler 30 schaltet während des Anlaufs den Verbraucher V weg, da sein Transistor 30b dann die Basis-Emitterdiode des Transistors 22 kurzschließt. Nach dem Anlauf wird durch den jetzt leitenden Transistor 29 der Transistor 32 gesperrt und die Leuchtdiode 30a im Optokoppler nicht mehr angesteuert. Dadurch wird der Transistor 30b hochohmig, der Transistor 22 wird über den Strom durch den Widerstand 21 leitend und der Verbraucher V wird mit Strom versorgt. Die Anschaltung des oder der Verbraucher kann auch in anderer Weise unmittelbar oder mittelbar bewirkt werden.

Bei der Schaltungsanordnung nach Fig. 4 wird während des Anlaufvorganges der Verbraucher weggeschaltet. Nach dem Anlaufen wird der Verbraucher zugeschaltet. In Abwandlung der in Fig. 4 gezeigten Schaltungsanordnung können gegebenenfalls mehrere Verbraucher vorgesehen sein, von denen während des Anlaufvorgangs nur ein Teil abgeschaltet wird. Ferner kann gegebenenfalls ein Verbraucher teilweise abgeschaltet werden.

Das Abschalten vom Verbraucher wird nach Fig. 4 durch die Vorrichtung gestartet, die zum Umschalten von beschränktem Tastverhältnis für den Anlauf auf frei geregeltes Tastverhältnis im Betriebsfall dient. Dies ist dann besonders vorteilhaft, wenn die Schaltungsanordnung in mehreren unterschiedlichen Fernspeiseeinrichtungen oder mit unterschiedlichen Verbrauchern betrieben werden soll. Das Anlaufverhalten kann dann demjenigen Betriebsfall oder Einschaltfall angepaßt werden, für den die meisten Beschränkungen bestehen. D. h. für das Fernspeisesystem, daß der Schaltungsanordnung im Betriebsfall oder während des Anlaufens des Fernspeisesystems die kleinste Spannung je Schaltungsanordnung zur Verfügung stellt.

Der zusätzliche Aufwand ist auch hier sehr gering, da der Spannungsteiler, der zur Beschränkung des maximalen Tastgrades erforderlich ist, mit anderen Werten auch für den Betriebsfall Verwendung finden kann. Der Spannungsteiler erzwingt dann, daß der Schalter 3 auch bei großer Überlast in an sich bekannter Weise immer im Schaltbetrieb arbeitet.

Strom-Spannungs-Umrichter mit eingangsseitiger Anpassung der Spannung an die jeweils geforderte Leistungsaufnahme reduzieren ihre Eingangsspannung, wenn der Eingangsstrom erhöht wird. Daß diese Erhöhung auf einen Störfall, meist auf die Induktion eines Stromes von außerhalb des Systems her, zurückgeht, ist nicht erkennbar. Eine geringfügige Erhöhung des Stromes im Fernspeisekreis ist zunächst ohne Bedeutung und beeinträchtigt nicht die Funktion der Schaltungsanordnung. Steigt der Strom im Fernspeisekreis jedoch über ein bestimmtes Maß an, so muß entweder der Schalter 3 auch dafür dimensioniert sein oder es besteht die Gefahr, daß die Schaltungsanordnung ausfällt.

Der Fernspeisestrom wird mit einem Fühlglied erfaßt. Der Umrichter kann während der Zeit des unzulässigen Überstroms von einem zusätzlichen Strompfad überbrückt werden, der von dem Fühlglied aus angesteuert wird und den Überstrom ableitet. Dieser Strompfad wird in besonders einfacher Weise durch die gleichen Vorrichtungen gebildet, die auch den als Hauptumrichter dienenden Schaltregler SR während des Anlaufens der Hilfsspannung kurzschließen.

Der Schalter 16 nach Fig. 2 sorgt dafür, daß der Eingang des Schaltreglers SR während der Zeit eines unzulässig großen Eingangsstromes $i_o$ überbrückt wird. Auch der Schalter 3 des Schaltreglers SR kann zu diesem Zweck vorteilhaft Verwendung finden. Er muß in diesem Fall zwar für den Überstrom ausgelegt sein, braucht aber nicht diesen Strom mit der Taktfrequenz zu schalten. Dies stellt eine wesentliche Erleichterung dar.

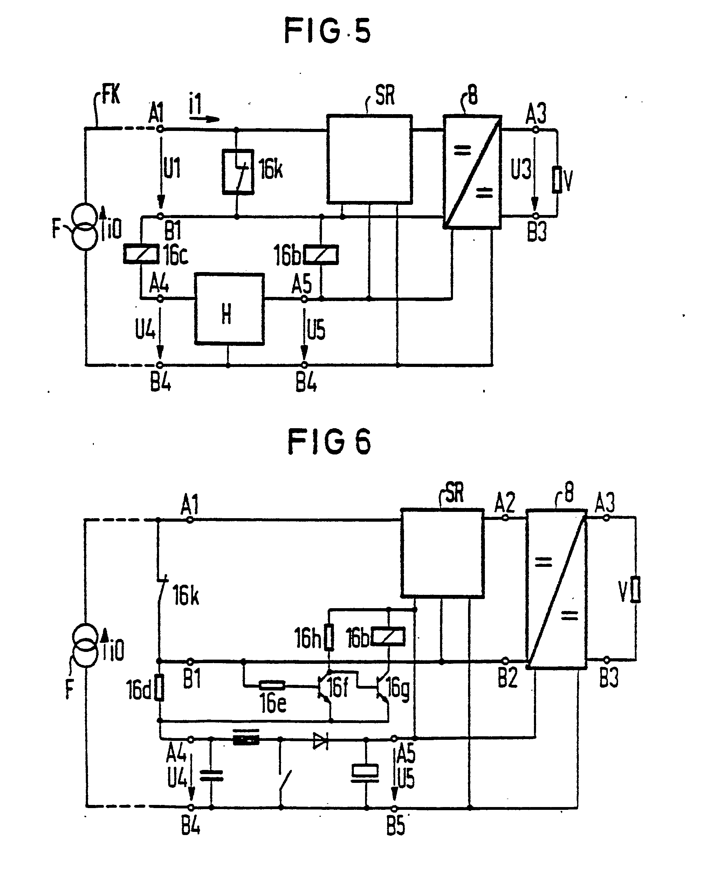

Nach Fig. 5 wird der Schalter 16 durch ein Relais realisiert, das zur Gewährleistung des Anlaufverhaltens der Schaltungsanordnung einen Ruhekontakt 16k hat. Er wird nach dem Anlaufen der Hilfsspannung U5-U4 von dieser über die Wicklung 16b geöffnet. Zur Ableitung der Überströme wird für das Relais 16 zweckmäßigerweise eine zweite Wicklung im Leitungszug der Klemmen B1-A4 oder auch vor der Klemme A1 bzw. nach B4 vorgesehen, die den Ruhekontakt im Sinne eines Arbeitskontaktes schließt. Diese Wicklung ist in Fig. 5 zwischen den Klemmen B1 und A4 eingezeichnet und mit 16c bezeichnet. Die zweite Wicklung ist aber so dimensioniert, daß bei normalem Fernspeisestrom die Hilfsspannung den Kontakt des Relais geöffnet halten kann. Besonders vorteilhaft ist bei einer solchen Lösung, daß Störungen der Hilfsspannung, etwa hervorgerufen durch starke überlagerte Wechselströme, auf die der Hilfsumrichter H nicht richtig reagieren kann, in gleicher Weise zum Schließen des Kontaktes 16 beitragen und dieser erst bei ordnungsgemäßem Arbeiten des Hilfsumrichters H einen Betrieb des als Leistungsumrichter dienenden Schaltreglers SR erlaubt.

Statt einer zweiten Wicklung kann im Leitungszug A1-B4 auch ein Stromfühler z. B. in Form eines Widerstandes liegen, der mittelbar oder unmittelbar den Schalter 16 schließt. Eine solche Lösung ist in Fig. 6 angegeben. In Fig. 6 steuert der Spannungsabfall an einem Widerstand 16d über einen Widerstand 16e einen Transistor 16f, der bei normalem Fernspeisestrom gesperrt ist. Der Transistor 16g kann daher, angesteuert über den Widerstand 16h, Strom führen und den Ruhekontakt 16k über die Wicklung 16b öffnen, sobald die Hilfsspannung U5-U4 einsetzt. Überschreitet der Fernspeisestrom $i_o$ einen vorgegebenen Wert, so wird der Transistor 16f leitend. Der dann gesperrte Transistor 16g ermöglicht ein Schließen des Ruhekontakts 16d. Die Schaltung kann ähnlich wie bei Fig. 6 gezeigt auch zweckmäßigerweise mit einer Zeitverzögerung aufgebaut werden, um bei Wechselströmen ruhiger zu arbeiten.

Eine weitere vorteilhafte Möglichkeit besteht darin, den Schalter 3 bei Überstrom zu schließen. In diesem Fall muß allerdings der Hilfsumrichter H zumindest ausreichend weiterarbeiten, um ein aktives Ansteuern des Schalters 3 zu gewährleisten. Bei der im allgemeinen vergleichsweise geringen Leistungsabgabe des Hilfsumrichters H ist das meist möglich.

In Fig. 7 ist ein Ausschnitt aus einer Schaltungsanordnung gezeigt, bei der der Schalter 3 zum Ableiten des Überstroms benutzt wird. Der Strom wird hier als Spannungsabfall an einem 1 Ω-Widerstand 38 in Serie zum dem den Schalter 3 bildenden Leistungs-MOS-Feldeffekttransistor erfaßt und über ein RC-Glied 39, 40 einem Transistor 41 zugeleitet. Der Transistor 41 greift in den Leitungszug der Ansteuerung in der Weise ein, daß der Schalttransistor 3m dauernd leitend bleibt. Da nur hohe Überströme erfaßt werden sollen, ist es von geringer Bedeutung, ob das Fühlglied direkt im Zuge des Fernspeisestromes liegt, oder in Serie zum Schalter 3, wo der in den Ausgangskreis des Schaltreglers SR fließende Strom nicht erfaßt wird.

Die beschriebenen Maßnahmen zur Überbrückung des Schaltreglers SR beim Anlaufen der Hilfsspannung und bei Überstrom lassen sich auch kombinieren, z. B. ein Relais 16 mit Ruhekontakt der von der Hilfsspannung geschlossen wird und ein zweites Relais, das einen Arbeitskontakt parallel zu diesem Ruhekontakt hat und der bei Überstrom von einer Wicklung im Fernspeisekreis geschlossen wird. Diese Kombinationen sind zwar aufwendiger, sie können aber unter Umständen Vorteile bei der Realisierung bringen, da die jeweils eingesetzten Bauteile bzw. Baugruppen nur eine der beiden benötigten Aufgaben bewältigen müssen, und so leichter diesen angepaßt werden können.

Das Relais mit seinem Ruhekontakt und seiner Wicklung 16b und 16c aus Fig. 5 kann gegebenenfalls als elektronisches Relais oder elektronische Schaltung mit oder ohne Relais ausgebildet sein und dabei den Schalter 3 mit benutzen.

Die Schaltungsanordnung kann in einem Fernspeisesystem nach Fig. 1 mit gleich- oder verschiedenartigen weiteren Schaltungsanordnungen gemeinsam gespeist werden. Dabei können die Schaltungsanordnungen W1 ... Wn gleich oder verschieden ausgebildet und/oder bemessen sein.

Bei einer bevorzugten Ausführungsform der

Schaltungsanordnung nach Fig. 3 betragen
der Wert des Widerstandes 3f 2 M Ω
der Wert des Widerstandes 3g 100 k Ω und
der Wert des Widerstandes 3j 1 M Ω.
Als Diode 3i ist eine solche mit kleinem Reststrom gewählt.

**Patentansprüche**

1. Schaltungsanordnung zur Speisung von elektrischen Verbrauchern aus einer Einrichtung zur Fernspeisung mittels Gleichstrom-Reihenspeisung aus wenigstens einer Konstantstromquelle, wobei an verschiedenen Stellen des Fernspeisekreises jeweils wenigstens ein Verbraucher (V) über einen Gleichstrom-Gleichspannungs-Umsetzer (8) an den Fernspeisekreis anschließbar ist, wobei der Gleichstrom-Gleichspannungs-Umsetzer einen Schaltregler (SR) enthält, der zur Erzeugung einer Gleichspannung aus dem Konstantstrom ein mittels einer Steuerschaltung (6, 7) in Abhängigkeit von der dieser im Normalbetrieb, wenigstens näherungsweise konstant zu haltenden Gleichspannung steuerbares, parallel zum Eingang des ersten Schaltreglers (SR) angeordnetes Schaltglied (3) enthält, und bei dem zwischen dem Schaltglied (3) und einem parallel zum Ausgang des Schaltreglers (SR) liegenden Kondensator (5) eine derart gepolte Diode (4) liegt, daß die Diode (4) bei leitendem Schaltglied (3) gesperrt ist, dadurch gekennzeichnet, daß die Steuerschaltung (6, 7) derart ausgebildet ist, daß sie während des Anlaufvorganges eine Impulsfolge mit derart festem oder derart beschränktem Tastverhältnis abgibt, daß die Spannung am Eingang des Schaltreglers (SR) kleiner als der nach Beendigung des Anlaufvorganges maximal mögliche Wert der Eingangsspannung (U1) ist und/oder daß die Schaltungsanordnung mit einer Schaltvorrichtung (21, 22) versehen ist, mit deren Hilfe während des Anlaufvorganges wenigstens ein Teil der an den Gleichstrom-Gleichspannungs-Umsetzer angeschlossenen Last (V) abschaltbar ist.

2. Schaltungsanordnung nach Anspruch 1, dadurch gekennzeichnet, daß das Ende des Anlaufvorganges durch einen Spannungsdiskriminator feststellbar ist, der an den Ausgang des Schaltreglers (SR) oder einer dem Schaltregler (SR) nachgeschalteten Anordnung angeschlossen ist (Fig. 4).

3. Schaltungsanordnung nach Anspruch 2, dadurch gekennzeichnet, daß die Steuerschaltung (6, 7) derart ausgebildet und/oder betrieben ist, daß das Tastverhältnis während des Anlaufvorganges so gewählt ist, daß die Leistungsaufnahme um einen vorgegebenen Betrag größer ist als die bei der Nennleistung.

4. Schaltungsanordnung nach Anspruch 1 oder 2, dadurch gekennzeichnet, daß das während des Anlaufvorganges wirksame Tastverhältnis derart bemessen oder begrenzt ist, daß die Summe der Eingangsspannungen der im Fernspeisekreis liegenden Umsetzer um einen vorgegebenen Betrag kleiner ist als die von der Konstantstromquelle maximal abgebbare Spannung.

5. Schaltungsanordnung nach einem der Ansprüche 1 bis 4, dadurch gekennzeichnet, daß parallel zum Eingang des Schaltreglers (SR) ein Schalter (16) angeordnet ist und daß dieser Schalter (16) und/oder das Schaltglied (3) des Schaltreglers (SR) vor dem Anlaufvorgang geschlossen ist.

6. Schaltungsanordnung nach Anspruch 5, dadurch gekennzeichnet, daß der steuerbare Schalter (16) durch einen in Serie zum Eingang des Schaltreglers (SR) liegenden Stromfühler derart steuerbar ist, daß er bei Strömen, die einen vorgegebenen Grenzwert übersteigen, geschlossen wird.

7. Schaltungsanordnung nach Anspruch 5 oder 6, dadurch gekennzeichnet, daß der Stromfühler in Serie zum Schaltglied (3) des Schaltreglers (SR) liegt und daß das Schaltglied (3) durch den Stromfühler derart steuerbar ist, daß es bei Strömen, die einen vorgegebenen Grenzwert übersteigen, schließt.

8. Schaltungsanordnung nach Anspruch 7, dadurch gekennzeichnet, daß der steuerbare Schalter (16) ein Ruhekontakt eines Relais ist, dessen Wicklung von einem weiteren Schaltregler (H), insbesondere von der Differenz von Ausgangsspannung (U5) und Eingangsspannung (U4) des weiteren Schaltreglers (H) gesteuert ist und daß das Relais mit zwei Wicklungen versehen ist, von denen die eine an eine Hilfsspannung und die andere an den Stromfühler angeschlossen ist oder diesen Stromfühler selbst bildet.

9. Schaltungsanordnung nach einem der Ansprüche 1 bis 8, dadurch gekennzeichnet, daß der steuerbare Schalter (16) durch den weiteren Schaltregler (H) derart steuerbar ist, daß der Schalter (16) nur bei Vorhandensein einer Hilfsspannung (U5) geöffnet ist, die eine Ansteuerschaltung (6, 7) zur Ansteuerung des Schaltgliedes (3) versorgt.

10. Schaltungsanordnung nach einem der Ansprüche 1 bis 9 dadurch gekennzeichnet, daß der Schaltregler (SR) eine aus einer Hilfsspannungsquelle (H) versorgte Steuerschaltung (6, 7) enthält und daß die Hilfsspannungsquelle durch einen weiteren Schaltregler (H) gebildet ist, dessen Schaltglied parallel zum Eingang des Schaltreglers (H) angeordnet ist und daß zwischen dem Schaltglied (11) und einem parallel zum Ausgang des Schaltreglers (H) liegenden Kondensator (13) eine derart gepolte Diode (12) liegt, daß die Diode (12) bei leitendem Schaltglied (11) gesperrt ist und daß die beiden Schaltregler (SR, H) am Eingang in Serie zueinander angeordnet sind.

**Claims**

1. Circuit arrangement for supplying electrical appliances from a device for power-feeding by means of series direct current feeding from at least one constant current source, in which arrangement in each case at least one appliance (V) can be connected to the power-feeding circuit via a direct-current/direct-voltage converter (8) at various points in the power-feeding circuit, the direct-current/direct-voltage converter containing a switched-mode regulator (SR) which contains, for generating a direct voltage from the constant current, a switching element (3) which is arranged in parallel with the input of the first switched-mode regulator (SR) and can be controlled by means of a control circuit (6, 7) in dependence on this direct voltage which must be kept at least approximately constant in normal operation, and in which switched-mode regulator a diode (4) is located between the switching element (3) and a capacitor (5) which is located in parallel with the output of the switched-mode regulator (SR), which diode (4) is polarized in such a manner that the diode (4) is blocked when the switching element (3) conducts, characterized in that the control circuit (6, 7) is constructed in such a manner that it emits, during the starting process, a pulse sequence having a duty ratio which is fixed or limited in such a manner that the voltage at the input of the switched-mode regulator (SR) is lower than the maximum value of the input voltage (U1) possible after termination of the starting process and/or that the circuit arrangement is provided with a switching device (21, 22), with the aid of which at least a part of the load (V) connected to the direct-current/direct-voltage converter can be disconnected during the starting process.

2. Circuit arrangement according to Claim 1, characterized in that the end of the starting process can be detected by a voltage discriminator which is connected to the output of the switched-mode regulator (SR) or to an arrangement following the switched-mode regulator (SR) (Figure 4).

3. Circuit arrangement according to Claim 2, characterized in that the control circuit (6, 7) is constructed and/or operated in such a manner that the duty ratio during the starting process is selected in such a manner that the power consumption is greater by a predetermined amount than that at the rated power.

4. Circuit arrangement according to Claim 1 or 2, characterized in that the duty ratio which is effective during the starting process is dimensioned or limited in such a manner that the sum of the input voltages of the converters located in the power-feeding circuit is lower by a predetermined amount that the maximum voltage which can be emitted by the constant current source.

5. Circuit arrangement according to one of Claims 1 to 4, characterized in that a switch (16) is arranged in parallel with the input of the switched-mode regulator (SR) and that this switch (16) and/or the switching element (3) of the switched-mode regulator (SR) is closed before the starting process.

6. Circuit arrangement according to Claim 5, characterized in that the controllable switch (16) can be controlled by a current sensor, which is located in series with the input of the switched-mode regulator (SR), in such a manner that it is closed with currents which exceed a predetermined limit value.

7. Circuit arrangement according to Claim 5 or 6, characterized in that the current sensor is located in series with the switching element (3) of the switched-mode regulator (SR), and that the switching element (3) can be controlled by the current sensor, in such a manner that it closes with currents which exceed a predetermined limit value.

8. Circuit arrangement according to Claim 7, characterized in that the controllable switch (16) is a normally-closed contact of a relay, the winding of which is controlled by a further switched-mode regulator (H), in particular by the difference between the output voltage (U5) and the input voltage (U4) of the further switched-mode regulator (H), and that the relay is provided with two windings, one of which is connected to an auxiliary voltage and the other one of which is connected to the current sensor or itself forms this current sensor.

9. Circuit arrangement according to one of Claims 1 to 8, characterized in that the controllable switch (16) can be controlled by the further switched-mode regulator (H), in such a manner that the switch (16) is only opened when an auxiliary voltage (U5) is present which supplies a drive circuit (6, 7) for driving the switching element (3).

10. Circuit arrangement according to one of Claims 1 to 9, characterized in that the switched-mode regulator (SR) contains a control circuit (6, 7) which is supplied from an auxiliary voltage source (H), and that the auxiliary voltage source is formed by a further switched-mode regulator (H), the switching element of which is arranged in parallel with the input of the switched-mode regulator (H) and that a diode (12) is located between the switching element (11) and a capacitor (13) which is located in parallel with the output of the switched-mode regulator (H), which diode (12) is polarized in such a manner that the diode (12) is blocked when the switching element (11) conducts, and that the two switched-mode regulators (SR, H) are arranged in series with one another at the input.

**Revendications**

1. Montage pour alimenter des appareils d'utilisation électriques à partir d'un dispositif servant à réaliser l'alimentation à distance au moyen d'une alimentation en série à courant continu à partir d'au moins une source de courant constant, et dans lequel, en différents points du circuit d'alimentation à distance, au moins un appareil d'utilisation respectif (V) peut être raccordé au circuit d'alimentation à distance par l'intermédiaire d'un convertisseur courant continu-tension continue (8), et dans lequel ce convertisseur contient un régulateur de commutation (SR) qui, pour la production d'une tension continue à partir du courant constant, contient un élément de commutation (3) pouvant être commandé au moyen d'un circuit de commande (6, 7) en fonction de la tension continue devant être maintenue au moins approximativement constante par ce circuit pendant le fonctionnement normal, et monté en parallèle avec l'entrée du premier régulateur de commutation (SR), et dans lequel entre l'élément de commutation (3) et un condensateur (5) monté en parallèle avec la sortie du régulateur de commutation (SR) se trouve disposée une diode (4) polarisée de telle sorte qu'elle est bloquée lorsque l'élément de commutation (3) est conducteur, caractérisé par le fait que le circuit de commande (6, 7) est agencé de manière à délivrer, pendant le processus de démarrage, une suite d'impulsions présentant un taux d'impulsions fixe ou limité de telle manière que la tension présente à l'entrée du régulateur de commutation (SR) est inférieure à la valeur maximale possible de la tension d'entrée (U1) après la fin du processus de démarrage et/ou que le montage est équipé d'un dispositif de commutation (21, 22), à l'aide duquel, pendant le processus de démarrage, au moins une partie de la charge (V) raccordée au convertisseur courant continu-tension continue peut être débranchée.

2. Montage suivant la revendication 1, caractérisé par le fait que la fin du processus de démarrage peut être déterminée au moyen d'un discriminateur de tension qui est raccordé à la sortie du régulateur de commutation (SR) ou à un dispositif branché en aval du régulateur de commutation (SR).

3. Montage suivant la revendication 2, caractérisé par le fait que le circuit de commande (6, 7) est agencé et/ou fonctionne de telle sorte que le taux d'impulsions pendant le processus de démarrage est choisi de manière que la puissance absorbée est supérieure, d'une valeur prédéterminée, à la puissance absorbée dans le cas de la puissance nominale.

4. Montage suivant la revendication 1 ou 2, caractérisé par le fait que le taux d'impulsions présent pendant le processus de démarrage est dimensionné ou limité de telle sorte que la somme des tensions d'entrée des convertisseurs situés dans le circuit d'alimentation à distance est inférieure, d'une valeur prédéterminée, à la tension pouvant être délivrée au maximum par la source de courant constant.

5. Montage suivant l'une des revendications 1 à 4, caractérisé par le fait qu'un interrupteur (16) est monté en parallèle avec l'entrée du régulateur de commutation (SR) et que cet interrupteur (16) et/ou l'élément de commutation (3) du régulateur de commutation (SR) est fermé avant le processus de démarrage.

6. Montage suivant la revendication 5, caractérisé par le fait que l'interrupteur commandable (16) peut être commandé par un détecteur de courant branché en série avec l'entrée du régulateur de commutation (SR) de telle sorte qu'il est fermé dans le cas de courants dépassant une valeur limite prédéterminée.

7. Montage suivant la revendication 5 ou 6, caractérisé par le fait que le détecteur de courant est branché en série avec l'élément de commutation (3) du régulateur de commutation (SR) et que l'élément de commutation (3) peut être commandé par le détecteur de courant de telle sorte qu'il est fermé dans le cas de courants, qui dépassent une valeur limite prédéterminée.

8. Montage suivant la revendication 7, caractérisé par le fait que l'interrupteur commandable (16) est un contact de repos d'un relais, dont l'enroulement est commandé par un autre régulateur de commutation (H), notamment par la différence entre la tension de sortie (U5) et la tension d'entrée (U4) de l'autre régulateur de commutation (H), et que le relais est pourvu de deux enroulements, dont l'un est placé à une tension auxiliaire et dont l'autre est raccordé au détecteur de courant ou bien constitue ce détecteur de courant lui-même.

9. Montage suivant l'une des revendications 1 à 8, caractérisé par le fait que l'interrupteur commandable (16) peut être commandé par l'autre régulateur de commutation (H) de telle sorte que l'interrupteur de courant (16) est ouvert uniquement dans le cas de la présence d'une tension auxiliaire (U5), qui alimente un circuit de commande (6, 7) servant à commander l'élément de commutation (3).

10. Montage suivant l'une des revendications 1 à 9, caractérisé par le fait que le régulateur de commutation (SR) contient un circuit de commande (6, 7) alimenté par une source de tension auxiliaire (H), et que la source de tension auxiliaire est formée par un autre régulateur de commutation (H), dont l'élément de commutation est monté en parallèle avec l'entrée du régulateur de commutation (H), et qu'entre l'élément de commutation (11) et un condensateur (13) monté en parallèle avec la sortie du régulateur de commutation (H) se trouve disposée une diode (12) polarisée de telle sorte qu'elle est bloquée lorsque l'élément de commutation (11) est conducteur, et que les deux régulateurs de commutation (SR, H) sont raccordés en série au niveau de l'entrée.

# FIG 1

# FIG 2

# FIG 3

# FIG 4

## FIG. 5

## FIG 6

# FIG 7